# EUROPEAN PATENT APPLICATION

(11) **EP 4 411 643 A1**
(43) Date of publication of application: **07.08.2024**
(21) Application number: 21958998.3
(22) Date of filing: 30.09.2021
(51) Int. Cl.: G06T 9/00, H04N 19/105, G06T 15/04

(54) **ENCODING AND DECODING METHODS, ENCODER, DECODER AND STORAGE MEDIUM**

(71) Applicant: Zhejiang University, Hangzhou, Zhejiang 310058 (CN); GUANGDONG OPPO MOBILE TELECOMMUNICATIONS CORP., LTD., Dongguan, Guangdong 523860 (CN)
(72) Inventor: YU, Lu, Dongguan, Guangdong 523860 (CN); LI, Sicheng, Dongguan, Guangdong 523860 (CN); WANG, Chuchu, Dongguan, Guangdong 523860 (CN); DAI, Zhenyu, Dongguan, Guangdong 523860 (CN)
(74) Representative: Taor, Simon Edward William
(86) International application number: PCT/CN2021/122472
(87) International publication number: WO 2023/050432

(57) **Abstract**

Embodiments of the present application provide encoding and decoding methods, an encoder, a decoder, and a storage medium. The decoding method comprises: a decoder decodes a code stream, and determines a first indication parameter; when the first indication parameter indicates that a sub-block image unit that does not comprise geometric information exists, a second indication parameter corresponding to the sub-block image unit is determined; and when the second indication parameter indicates that the sub-block image unit does not comprise geometric information, reconstruction processing is performed according to texture information corresponding to the sub-block image unit.

## Description

### TECHNICAL FIELD

Embodiments of the present disclosure relate to the field of picture processing technology, in particular to an encoding and decoding method, an encoder, a decoder and a storage medium.

### BACKGROUND

In the field of video encoding and decoding, in the process of rendering a non-diffuse reflection surface by using a picture-based rendering method, it is first necessary to capture colours of the surface in different observation directions using cameras, and then the colours of the surface captured by the cameras in the different observation directions are weighted and fused according to the position and observation direction of the rendering window in the process of rendering to form the colour of the surface in the position and orientation of the rendering window.

At present, it is allowed to use multiple texture Patch Data Units (PDUs) to express the same region in three-dimensional space and place them into the texture atlas. At the same time, however, the geometry PDU pictures corresponding to these texture PDU pictures must also be placed into the geometry atlas for coding and transmission.

It can be seen that the currently supported expression for the non-diffuse reflection surface in the three-dimensional space cannot take account of both the expression of non-diffuse reflection characteristics and compression performance. Therefore, how to improve the encoding and decoding efficiency and compression performance on the basis of satisfying the full expression of the non-diffuse reflection characteristics of the surface has become a key problem to be solved.

### SUMMARY

Embodiments of the present disclosure provide an encoding and decoding method, an encoder, a decoder and a storage medium, which can reduce the complexity while improving the decoding accuracy and realize a simple and efficient encoding and decoding method, thereby improving the compression performance.

The technical solutions of the embodiments of the present disclosure may be implemented as follows.

In a first aspect, the embodiments of the present disclosure provide a decoding method applied to a decoder. The method includes the following operations.

A bitstream is decoded to determine a first indication parameter.

When the first indication parameter indicates that there is a Patch Data Unit (PDU) that does not contain geometry information, a second indication parameter corresponding to the PDU is determined.

When the second indication parameter indicates that the PDU does not contain geometry information, reconstruction process is performed based on texture information corresponding to the PDU.

In a second aspect, the embodiments of the present disclosure provide an encoding method applied to an encoder. The method includes the following operations.

When a PDU does not contain geometry information, the PDU is encoded to generate a bitstream, and a first indication parameter and a second indication parameter of the PDU are determined simultaneously. The first indication parameter is used for determining whether there is a PDU that does not contain geometry information, and the second indication parameter is used for determining whether the PDU contains geometry information.

The first indication parameter and the second indication parameter are signalled into the bitstream.

In a third aspect, the embodiments of the present disclosure provide a decoder, which includes a decoding part, a first determination part and a reconstruction part.

The decoding part is configured to decode a bitstream.

The first determination part is configured to determine a first indication parameter, and when the first indication parameter indicates that there is a PDU that does not contain geometry information, determine a second indication parameter corresponding to the PDU.

The reconstruction part is configured to perform reconstruction process based on texture information corresponding to the PDU when the second indication parameter indicates that the PDU does not contain geometry information.

In a fourth aspect, the embodiments of the present disclosure provide a decoder including a first processor and a first memory having stored thereon instructions executable by the first processor. When the instructions are executed by the first processor, the above decoding method is implemented.

In a fifth aspect, the embodiments of the present disclosure provide an encoder including an encoding part.

The encoding part is configured to encode the PDU to generate a bitstream when a PDU does not contain geometry information, simultaneously determine a first indication parameter and a second indication parameter of the PDU, and signal the first indication parameter and the second indication parameter in the bitstream. The first indication parameter is used for determining whether there is a PDU that does not contain geometry information, and the second indication parameter is used for determining whether the PDU contains geometry information.

In a sixth aspect, the embodiments of the present disclosure provide an encoder, which includes a second processor and a second memory having stored thereon instructions executable by the second processor. When the instructions are executed by the second processor, the above decoding method is implemented.

In a seventh aspect, the embodiments of the present disclosure provide a computer storage medium. The computer storage medium stores a computer program that implements the above decoding method in the first aspect when being executed by a first processor or the above decoding method in the second aspect when being executed by a second processor.

The embodiments of the present disclosure provide an encoding and decoding method, an encoder, a decoder and a storage medium. The decoder decodes a bitstream to determine the first indication parameter, determines the second indication parameter corresponding to the PDU when the first indication parameter indicates that there is a PDU that does not contain geometry information, and performs reconstruction process based on texture information corresponding to the PDU when the second indication parameter indicates that the PDU does not contain geometry information. When a PDU does not contain geometry information, the PDU is encoded to generate a bitstream, and the first indication parameter and the second indication parameter of the PDU are simultaneously determined. The first indication parameter is used for determining whether there is a PDU that does not contain geometry information, and the second indication parameter is used for determining whether the PDU contains geometry information. The first indication parameter and the second indication parameter are signalled into the bitstream. That is, in the embodiments of the present disclosure, whether there is a PDU that does not contain geometry information can be determined through the first indication parameter, and whether the PDU does not contain geometry information can be determined through the second indication parameter, so that transmission of different quantities of texture information and geometry information can be supported. The information redundancy degree of geometry data can be reduced while effectively improving the rendering quality through sufficient texture information, thereby realizing improvement of encoding and decoding efficiency and compression performance while satisfying the full expression of the non-diffuse reflection characteristics of the surface.

### BRIEF DESCRIPTION OF THE DRAWINGS

FIG. 1 is a first diagram of an implementation flow of a decoding method.
FIG. 2 is a second diagram of an implementation flow of a decoding method.
FIG. 3 is a third diagram of an implementation flow of a decoding method.
FIG. 4 is a diagram of an implementation flow of an encoding method.
FIG. 5 is a first diagram of a composition structure of a decoder provided by an embodiment of a present disclosure.
FIG. 6 is a second diagram of a composition structure of a decoder provided by an embodiment of a present disclosure.
FIG. 7 is a first diagram of a composition structure of an encoder provided by an embodiment of a present disclosure.
FIG. 8 is a second diagram of a composition structure of an encoder provided by an embodiment of a present disclosure.

### DETAILED DESCRIPTION

The technical solutions in the embodiments of the present disclosure would be clearly and completely described below with reference to the drawings in the embodiments of the present disclosure. It is to be understood that the specific embodiments described herein are intended only to explain the relevant application and not to limit the present disclosure. In addition, it should be noted that for ease of description, only portions related to the present disclosure are illustrated in the drawings.

In the real life, influenced by the material of the object, the same point on the same surface of the same object often presents different colours when being observed from different observation directions. The phenomenon that the colour of the surface of the object changes with the change of observation directions is referred to as the non-diffuse reflection phenomenon of the surface of the object, and the surface is referred to as the non-diffuse reflection surface.

In the Moving Picture Expert Group (MPEG) Immersive Video (MIV), in order to reduce the transmission pixel rate and improve the compression efficiency, removal of redundancy among viewpoints would performed for Multiview Video plus Depth input to the system frame by frame. Finally, only a geometry PDU picture (Patch) describing geometry information of the region and a texture PDU picture corresponding to the geometry PDU picture are used to express a region in three-dimensional space on a single time slice. These PDU pictures would be placed on a canvas called the PDU Atlas. Different types of PDU pictures would be placed on different Atlases. The Atlas where the geometry PDU picture is placed is called a geometry Atlas. The Atlas where the texture PDU picture is placed is called a texture Atlas. After these Atlases are stacked in time to form an Atlas sequence, the Atlas sequence is encoded by using a video codec to generate a bitstream and then the bitstream is transmitted.

In a Test model of MPEG Immersive Video (TMIV) which is an existing implementation method of the MIV, in the process of removing redundancy among viewpoints, only a geometry PDU picture and a texture PDU picture are used to express a region in the three-dimensional space. Because the colours of diffuse reflection surface in various observation directions are very close, even almost identical, this expression method is feasible and efficient when expressing the diffuse reflection surface. However, when expressing the non-diffuse reflection surface, this expression method is limited by the fact that only one texture PDU picture is transmitted for a region, and it is thus impossible to show different non-diffuse reflection characteristics of different colours in different observation directions.

In the process of rendering the non-diffuse reflection surface by using a picture-based rendering method, it is first necessary to capture the colours of the surface in different observation directions using cameras, , and then the colours of the surface captured by the cameras in the different observation directions are weighted and fused according to the position and observation direction of the rendering window in the process of rendering to form the colour of the surface in the position and orientation of the rendering window. In short, in order to realize the expression of the non-diffuse reflection surface, it is necessary to use multiple observed texture pictures of the surface in different observation directions. Therefore, an efficient method to express the non-diffuse reflection surface is to use one geometry PDU picture and multiple texture PDU pictures observed in different directions.

The existing MIV standard allows using multiple texture PDU pictures to express the same region in the three-dimensional space and place them into the texture Atlas. At the same time, however, the current MIV standard requires that the geometry PDU pictures corresponding to these texture PDU pictures must also be placed into the geometry Atlas for encoding and transmission.

That is to say, the method for expressing the non-diffuse reflection surface in the three-dimensional space supported by the MIV standard mainly includes using one geometry PDU picture and one texture PDU picture for expression, or using multiple geometry PDU pictures and the same number of multiple texture PDU pictures for expression.

However, the expression method in which only one geometry PDU picture and one texture PDU picture are used cannot fully express the non-diffuse reflection characteristics of the surface, which would affect the subsequent rendering quality. Although the non-diffuse reflection characteristics of the surface can be fully expressed by using the expression method in which multiple geometry PDU pictures and multiple texture PDU pictures are used, the expression efficiency of geometry information is low due to the repeated expression of multiple geometry PDU pictures on the same surface, thus reducing the encoding efficiency.

It can be seen that the method for expressing the non-diffuse reflection surface in the three-dimensional space supported by the MIV standard cannot take account of both the expression of the non-diffuse reflection characteristics and the compression performance. Therefore, how to improve the encoding and decoding efficiency and compression performance on the basis of satisfying the full expression of the non-diffuse reflection characteristics of the surface has become a key problem to be solved.

In order to solve the above problem, in the embodiments of the present disclosure, whether there is a PDU that does not contain geometry information can be determined through the first indication parameter, and whether the PDU does not contain geometry information can be determined through the second indication parameter, so that the transmission of different quantities of texture information and geometry information can be supported. While effectively improving the rendering quality through sufficient texture information, the information redundancy degree of geometry data can be reduced, thereby realizing the improvement of the encoding and decoding efficiency and the compression performance while satisfying the full expression of the non-diffuse reflection characteristics of the surface.

Further, according to the encoding and decoding method provided in the present disclosure, it is not necessary to repeatedly express the same region in the three-dimensional space using multiple geometry PDUs, and only at least one geometry PDU can be used to express one region in the three-dimensional space. Therefore, in order to achieve efficient encoding and rendering of the non-diffuse reflection objects, G geometry PDUs and T texture PDUs are selected for expression and transmission of a non-diffuse reflection surface (G and T are integers, and 1 ≤ G < T). In this way, while providing multiple pieces of texture information from different perspectives to the same region, a small amount of geometry information that is enough to express the region can be transmitted. Compared with the existing solution supported in the MIV standard, this solution can support the full and efficient expression of the non-diffuse reflection surface, and the information redundancy of geometry data can be reduced while effectively improving the rendering quality of the surface, thereby realizing the encoding efficiency of the system when compressing the non-diffuse reflection surface.

The encoding and decoding method in the embodiments of the present disclosure may be applied to a video encoding system, or a video decoding system, or even both the video encoding system and the video decoding system at the same time, which would not be limited in the embodiments of the present disclosure.

The technical solutions in the embodiments of the present disclosure would be clearly and completely described in the following with reference to the drawings in the embodiments of the present disclosure.

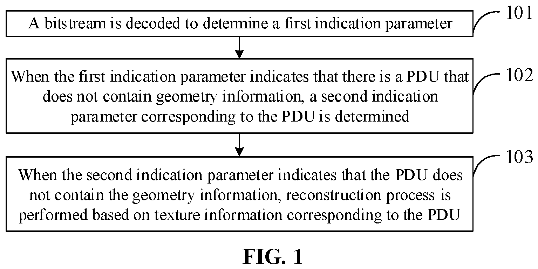

An embodiment of the present disclosure provides a decoding method applied to a decoder. FIG. 1 is a first diagram of an implementation flow of the decoding method. As illustrated in FIG. 1, the decoding method performed by the decoder may include the following operations.

In operation 101, a bitstream is decoded to determine a first indication parameter.

In the embodiment of the present disclosure, the decoder may determine the first indication parameter by decoding the bitstream.

Further, in the embodiment of the present disclosure, the first indication parameter may be a sequence-level indication parameter or a picture-level indication parameter.

It should be noted that in the embodiment of the present disclosure, the first indication parameter may indicate whether there is at least one PDU that does not contain geometry information among all PDUs corresponding to the current atlas sequence.

It should be noted that in the embodiment of the present disclosure, the first indication parameter may indicate whether there is at least one PDU that does not contain geometry information among all PDUs corresponding to the current atlas.

It may be understood that in the embodiment of the present disclosure, the first indication parameter may be understood as a flag indicating whether there is a PDU that contains only texture information but not geometry information. Specifically, the decoder may decode the bitstream to determine a variable as the first indication parameter, so that the determination of the first indication parameter may be implemented through the value of the variable. The value of the first indication parameter may be a first value or a second value.

It should be noted that in the embodiment of the present disclosure, if the value of the first indication parameter is the first value, it may be determined that there is a PDU that does not contain geometry information. If the value of the first indication parameter is the second value, it may be determined that there is no PDU that does not contain geometry information, that is, it is determined that all PDUs contain geometry information.

It may be understood that in the embodiment of the present disclosure, the first value may be set to 1 and the second value may be set to 0. Alternatively, the first value may be set to true and the second value may be set to false. The first value and the second value are not specifically limited in the present disclosure.

Further, in the embodiment of the present disclosure, the flag asme_patch_geometry_absent_flag may be used to represent the first indication parameter. For example, in the present disclosure, if a value of asme_patch_geometry_absent_flag is 1, it may be indicated that there is at least one PDU that does not contain a geometry patch, that is, it may be indicated that there is at least one PDU that contains only texture information but does not contain geometry information. If the value of asme_patch_geometry_absent_flag is 0, it may be indicated that there is no PDU that does not contain a geometry patch, that is, it may be indicated that all PDUs contain texture information and geometry information.

Further, in the embodiment of the present disclosure, the current atlas sequence may be a current to-be-decoded atlas sequence. Specifically, the atlas sequence may include geometry information or texture information corresponding to one or more PDUs. That is, the atlas sequence may include one or more geometry PDU pictures or texture PDU pictures corresponding to the one or more PDUs.

It may be understood that, in the embodiment of the present disclosure, for any PDU in the current atlas sequence, the PDU may contain both geometry information and texture information. Alternatively, the PDU may contain only the texture information and do not contain geometry information.

It may be understood that, in the embodiment of the present disclosure, for any PDU in the current atlas, the PDU may contain both geometry information and texture information. Alternatively, the PDU may contain only texture information and do not contain geometry information.

Further, in the embodiment of the present disclosure, for different situations where the PDU contains or does not contain geometry information, different methods may be selected to reconstruct the PDU. Therefore, the first indication parameter for indicating whether there is a PDU that does not contain geometry information may be determined first.

In operation 102, when the first indication parameter indicates that there is a PDU that does not contain geometry information, a second indication parameter corresponding to the PDU is determined.

In the embodiment of the present disclosure, after determining the first indication parameter, if the first indication parameter indicates that there is/are a PDU/PDUs that does/do not contain geometry information, the decoder may further determine a respective second indication parameter corresponding to each PDU to determine the PDU that does not contain geometry information based on the second indication parameter.

Further, in the embodiment of the present disclosure, since the first indication parameter may be either a sequence-level indication parameter or a picture-level indication parameter, when the first indication parameter indicates that there is a PDU that does not contain geometry information in a current atlas sequence, the second indication parameter corresponding to the PDU in the current atlas sequence is determined. Alternatively, when the first indication parameter indicates that there is a PDU that does not contain geometry information in a current atlas, the second indication parameter corresponding to the PDU in the current atlas is determined.

It should be noted that in the embodiment of the present disclosure, the second indication parameter may indicate whether the corresponding PDU does not contain geometry information.

It may be understood that in the embodiment of the present disclosure, the second indication parameter may be understood as a flag indicating whether only texture information is included and geometry information is not included. Specifically, the decoder may decode the bitstream to determine a variable as the second indication parameter, so that the determination of the second indication parameter may be implemented through the value of the variable. The value of the second indication parameter may be the first value or the second value.

It should be noted that in the embodiment of the present disclosure, if the value of the second indication parameter is the first value, it may be determined that the corresponding PDU does not contain geometry information. If the value of the second indication parameter is the second value, it may be determined that the corresponding PDU contains geometry information.

It may be understood that in the embodiment of the present disclosure, the first value may be set to 1 and the second value may be set to 0. Alternatively, the first value may be set to true and the second value may be set to false. The first value and the second value are not specifically limited in the present disclosure.

Further, in the embodiment of the present disclosure, the flag pdu_geometry_absent_flag may be used to represent the second indication parameter. For example, in the present disclosure, if the value of pdu_geometry_absent flag is 1, it may be indicated that the corresponding PDU does not contain a geometry patch, that is, it may be indicated that the corresponding PDU contains only texture information but does not contain geometry information. If the value of pdu_geometry_absent flag is 0, it may be indicated that the corresponding PDU contains the geometry patch, that is, it may be indicated that the corresponding PDU contains texture information and geometry information.

It should be noted that in the embodiment of the present disclosure, the current atlas sequence may include at least one sub-atlas, and each sub-atlas includes at least one PDU. Accordingly, the second indication parameter may be represented by using the flag pdu_geometry_absent_flag [tileID] [p], and tileID and p may be an identifier of a PDU. For example, in the present disclosure, if the value of pdu_geometry_absent_flag [tileID] [p] is 1, it may be indicated that the p-th PDU in the sub-atlas with tileID does not contain the geometry patch, that is, the p-th PDU in the sub-atlas with tileID contains only texture information but does not contain geometry information. If the value of pdu_geometry_absent flag [tileID] [p] is 0, it may be indicated that the p-th PDU in the sub-atlas with tileID contains the geometry patch, that is, the p-th PDU in the sub-atlas with tileID contains texture information and geometry information.

In operation 103, when the second indication parameter indicates that the PDU does not contain geometry information, reconstruction process is performed based on texture information corresponding to the PDU.

In the embodiment of the present disclosure, in a case that the first indication parameter indicates a presence of a PDU that does not contain geometry information, after determining the second indication parameter corresponding to the PDU, if it is determined that the second indication parameter indicates that the PDU does not contain geometry information, the reconstruction process may be further performed according to the texture information corresponding to the PDU.

It should be noted that, in the embodiment of the present disclosure, if it is determined through the second indication parameter that the corresponding PDU only contains texture information but does not contain geometry information, the texture information corresponding to the PDU may be determined first, and then the reconstruction process may be performed on the PDU by using the texture information. Finally, the reconstructed PDU corresponding to the PDU may be determined.

Further, in the embodiment of the present disclosure, when determining the reconstructed PDU corresponding to the PDU based on texture information corresponding to the PDU, the reconstruction process may be completed only by using texture information, or geometry information of the PDU may be reconstructed firstly by using geometry information of the reference PDU, and then reconstruction process of the picture may be completed in combination with texture information of the PDU.

It may be understood that in the present disclosure, one embodiment is that when the second indication parameter indicates that the PDU does not contain geometry information, texture information corresponding to the PDU may be determined first, and then the reconstruction process is performed on the PDU based on the texture information. The reconstructed PDU only contains the texture information, but does not contain geometry information.

In the embodiment of the present disclosure, if the second indication parameter indicates that the corresponding PDU contains only the texture patch (texture information) and does not contain the geometry patch (geometry information) (i.e., it is determined through the second indication parameter that the corresponding PDU does not contain geometry information), the decoding process of geometry information is not required, but only the corresponding texture information is decoded and acquired. Accordingly, during the subsequent reconstruction process of the picture, geometry information of the PDU is not considered, and the corresponding reconstructed PDU is determined only based on the corresponding texture information.

That is, according to the decoding method provided in the present disclosure, during the decoding process, for each atlas sequence (the current atlas sequence), asme_patch_geometry_absent_flag (the first indication parameter) corresponding to the atlas sequence is determined first, and then whether there is a PDU that does not contain the geometry patch in the atlas sequence (geometry information) is determined based on the asme_patch_geometry_absent_flag.

It should be noted that if the value of asme_patch_geometry_absent_flag is 1, it may be determined that there is a PDU that does not contain the geometry patch in the atlas sequence. In this case, in order to determine which PDU(s) does(do) not contain the geometry patch, it is necessary to further determine the pdu_geometry_absent flag (second indication parameter) corresponding to each PDU. If the value of asme_patch_geometry_absent_flag is 0, it may be determined that there is no PDU that does not contain the geometry patch in the atlas sequence. In this case, the determination of pdu_geometry_absent_flag is not needed, but the geometry patch (first geometry information) and the texture patch (texture information) of each PDU are directly obtained by decoding, so that the reconstruction process can be performed based on the geometry patch and the texture patch.

Further, in the embodiment of the present disclosure, if it is determined that there is a PDU that does not contain the geometry patch in the atlas sequence, in the process of decoding all PDUs in the atlas sequence one by one, it may be further judged whether the corresponding PDU contains the geometry patch according to pdu_geometry_absent flag. Specifically, if the value of pdu_geometry_absent_flag is 1, it may be determined that the corresponding PDU does not contain the geometry patch. In this case, the geometry patch in the corresponding PDU is no longer acquired from the geometry atlas during decoding, but only the texture patch in the corresponding PDU is acquired from the texture atlas. Finally, the corresponding reconstructed PDU may be determined according to the texture patch. If the value of pdu_geometry_absent_flag is 0, it may be determined that the corresponding PDU contains the geometry patch. In this case, it is still necessary to acquire the geometry patch in the corresponding PDU from the geometry atlas during decoding, and acquire the texture patch in the corresponding PDU from the texture atlas at the same time. Finally, the corresponding reconstructed PDU may be determined by combining the geometry patch and the texture patch.

It may be understood that in the present disclosure, one embodiment is that when the second indication parameter indicates that the PDU does not contain geometry information, texture information corresponding to the PDU and identification information of the reference PDU may be determined first, and then the first geometry information corresponding to the PDU is determined according to the identification information. Finally, the reconstruction process may be performed on the PDU according to the texture information and the first geometry information. The reconstructed patch contains both the texture information and geometry information.

It should be noted that, in the embodiment of the present disclosure, if the second indication parameter indicates that the corresponding PDU only contains the texture patch (texture information) and does not contain the geometry patch (geometry information) (i.e., is, it is determined through the second indication parameter that the corresponding PDU does not contain geometry information), the reconstruction process of geometry information needs to be performed first, and the corresponding texture information is acquired at the same time by decoding. Accordingly, in the subsequent reconstruction process of the picture, the corresponding reconstructed PDU may be determined by combining the texture information of the PDU with the reconstructed geometry information (first geometry information).

Further, in the embodiment of the present disclosure, the identification information of the reference PDU corresponding to the PDU may be determined first, and then the first geometry information corresponding to the PDU may be determined according to the identification information. The identification information may be used for determining the reference PDU. For example, the identification information may be represented by using pdu_geometry _reference_patch _id [tileID] [p], and tileID and p may be indexes of a reference PDU. The reference PDU may be pointed to a p-th PDU in the sub-atlas with tileID through the identification information pdu_geometry_absent flag [tileID] [p].

It may be understood that in the embodiment of the present disclosure, after the corresponding reference PDU is determined according to the identification information, the second geometry information corresponding to the reference PDU may be further determined, and the reconstruction of geometry information of the PDU may be completed by using the second geometry information. The first geometry information corresponding to the PDU may be determined.

That is, in the embodiment of the present disclosure, if it is determined based on the second indication parameter that the corresponding PDU does not contain geometry information, the first geometry information of the PDU may be reconstructed by using the second geometry information of the reference PDU, so that the corresponding reconstructed PDU may be determined based on texture information and the first geometry information of the PDU.

That is to say, according to the decoding method provided in the present disclosure, during the decoding process, for each atlas sequence (the current atlas sequence), asme_patch_geometry_absent_flag (the first indication parameter) corresponding to the atlas sequence is determined first, and then whether there is a PDU in the atlas sequence that does not contain a geometry patch (geometry information) is determined based on the asme_patch_geometry_absent_flag.

It should be noted that if the value of asme_patch_geometry_absent_flag is 1, it may be determined that there is a PDU that does not contain the geometry patch in the atlas sequence. In this case, in order to determine which PDU(s) does(do) not contain the geometry patch, it is necessary to further determine the pdu_geometry_absent flag (second indication parameter) corresponding to each PDU. If the value of asme_patch_geometry_absent_flag is 0, it may be determined that there is no PDU that does not contain the geometry patch in the atlas sequence. In this case, the determination of pdu_geometry_absent_flag is not necessary, and the geometry patch (first geometry information) and texture patch (texture information) of each PDU are directly obtained by decoding, so that the reconstruction process can be performed based on the geometry patch and texture patch.

Further, in the embodiment of the present disclosure, if it is determined that there is a PDU that does not contain the geometry patch in the atlas sequence, in the process of decoding all PDUs in the atlas sequence one by one, it may be further judged whether the corresponding PDU contains the geometry patch according to pdu_geometry_absent flag. Specifically, if the value of pdu_geometry_absent_flag is 1, it may be determined that the corresponding PDU does not contain the geometry patch. In this case, the geometry patch in the corresponding PDU is no longer acquired from the geometry atlas during decoding, but the index number pdu_geometry_reference_patch_id (identification information) of the geometry reconstructed reference PDU (reference PDU) of the corresponding PDU needs to be further determined. Further, the geometry patch (second geometry information) of the reference PDU pointed by the pdu_geometry_reference_patch _id may be acquired according to the pdu_geometry_reference_patch_id, and then the geometry patch of the PDU may be reconstructed by using the geometry patch of the reference PDU. Finally, the reconstruction process can be completed by combining the texture patch (texture information) acquired from the texture atlas to determine the corresponding reconstructed PDU. If the value of pdu_geometry_absent_flag is 0, it may be determined that the corresponding PDU contains the geometry patch. In this case, it is still necessary to acquire the geometry patch in the corresponding PDU from the geometry atlas during decoding, and acquire the texture patch in the corresponding PDU from the texture atlas at the same time. Finally, the corresponding reconstructed PDU may be determined by combining the geometry patch and the texture patch.

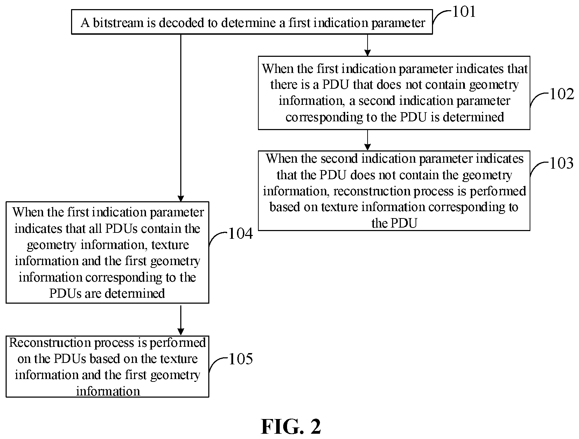

Further, in the embodiment of the present disclosure, FIG. 2 is a second diagram of an implementation flow of the decoding method. As illustrated in FIG. 2, after decoding the bitstream to determine the first indication parameter (i.e., after the operation 101), the decoding method performed by the decoder may further include the following operations.

In operation 104, when the first indication parameter indicates that all PDUs contain geometry information, texture information and the first geometry information corresponding to the PDUs are determined.

In the embodiment of the present disclosure, after determining the first indication parameter, the decoder may further determine the texture information and the first geometry information corresponding to each PDU if the first indication parameter indicates that all PDUs contain geometry information.

It may be understood that in the embodiment of the present disclosure, if it is determined that each PDU contains the geometry patch (geometry information) and the texture patch (texture information) based on the first indication parameter, texture information and the first geometry information corresponding to the PDU may be directly obtained by decoding.

That is, in the embodiment of the present disclosure, if the first indication parameter indicates that all the PDUs contain geometry information, it is not necessary to perform the determination of the second indication parameter, but texture information and the first geometry information of the PDUs may be obtained directly.

In operation 105, the reconstruction process is performed on the PDUs based on the texture information and the first geometry information.

In the embodiment of the present disclosure, after determining texture information and the first geometry information corresponding to the PDU, the reconstruction process may be performed on the PDU according to texture information and the first geometry information, and the corresponding reconstructed PDU may be finally obtained.

It should be noted that, in the embodiment of the present disclosure, for the PDU containing both texture information and the first geometry information, the reconstructed PDU may be directly determined by using the corresponding texture information and first geometry information.

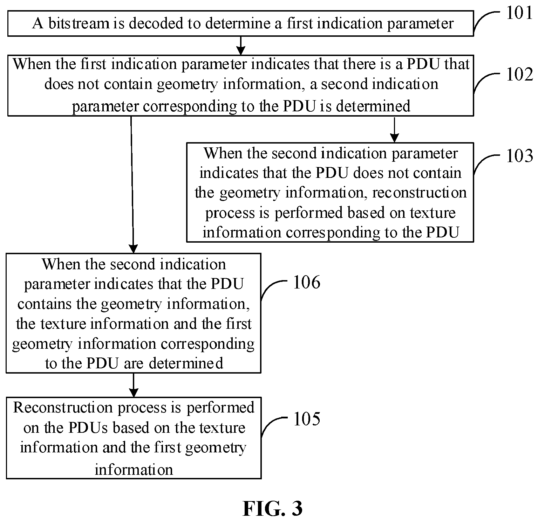

Further, in the embodiment of the present disclosure, FIG. 3 is a third diagram of an implementation flow of the decoding method. As illustrated in FIG. 3, when the first indication parameter indicates that there is a PDU that does not contain geometry information, after determining the second indication parameter corresponding to the PDU (i.e., after the operation 102), the decoding method performed by the decoder may further include the following operations.

In operation 106, when the second indication parameter indicates that the PDU contains geometry information, the texture information and the first geometry information corresponding to the PDU are determined.

In the embodiment of the present disclosure, in a case that the first indication parameter indicates that there is a PDU that does not contain geometry information, after determining the second indication parameter corresponding to the PDU, if it is determined that the second indication parameter indicates that the PDU contains geometry information, texture information and the first geometry information corresponding to the PDU may be further determined.

It may be understood that, in the embodiment of the present disclosure, if it is determined based on the second indication parameter that the corresponding PDU contain both the geometry patch (geometry information) and the texture patch (texture information), the texture information and the first geometry information corresponding to the PDU may be directly obtained by decoding.

That is, in the embodiment of the present disclosure, if the first indication parameter indicates that there is a PDU that does not contain geometry information, a specific case of whether each PDU contains geometry information may be further determined according to the determined second indication parameter. If the second indication parameter indicates that the corresponding PDU contains geometry information, that is, for the PDU containing both geometry information and the texture information, the texture information and the first geometry information of the PDU may be obtained directly.

In operation 105, the reconstruction process is performed on the PDUs based on the texture information and the first geometry information.

In the embodiment of the present disclosure, after determining the texture information and the first geometry information corresponding to the PDU, the PDU may be reconstructed according to the texture information and the first geometry information, and the corresponding reconstructed PDU may be finally obtained.

Further, in the embodiment of the present disclosure, when the second indication parameter indicates that the PDU does not contain geometry information, after the reconstruction process according to the texture information corresponding to the PDU, that is, after the operation 103, the method of rendering process by the decoder may include the following operations.

In operation 107, a target window is constructed based on the PDU containing geometry information.

In operation 108, colouring process is performed on the target window based on the texture information of the PDU to obtain a rendered picture.

In the embodiment of the present disclosure, for a PDU that does not contain geometry information, if only the texture information is selected to complete the reconstruction process, the target window may be further constructed based on the PDU that contains geometry information, and then the colouring process is performed on the target window based on the texture information of the PDU to obtain the rendered picture.

Further, in the embodiment of the present disclosure, after the decoding process is completed, the rendering process may be further performed by using the picture information obtained after the decoding. The rendering process may include two processes: the process of viewpoint view restoration, and the process of target window geometry reconstruction and pixel colouring.

It should be noted that, for the process of the viewpoint view restoration, a common manner is that for all PDUs, the texture patches in the PDU are sequentially restored to the original positions of the texture view of the original viewpoint to which the texture patches belong, and the geometry patches in the PDU are sequentially restored to the original positions of the geometry view of the original viewpoint to which the geometry patches belong. In the present disclosure, during the process of traversing all PDUs for the view restoration, if the first indication parameter indicates that all the PDUs contain both geometry information and the texture information, or if the second indication parameter indicates that the corresponding PDU contains both geometry information and the texture information, the viewpoint view restoration process may be performed on the PDU in the above common manner. However, for a PDU where the second indication parameter indicates that the PDU does not contain geometry information and only contains the texture information (i.e. for a PDU of which the pdu_geometry_absent_flag value is 1), it is possible to choose to restore only the texture patches of the PDU to the original position of the texture view of the original viewpoint to which the texture patches belong, without involving any restoration operation of the geometry patches.

Further, in the embodiment of the present disclosure, when performing the target window geometry reconstruction and pixel colouring process, the geometry picture of the target window may be reconstructed by using the existing multi-viewpoint geometry picture restored by the viewpoint view restoration process. Each pixel in the target window is traversed, and the multi-viewpoint texture picture is restored according to the position of the pixel in the target window in three-dimensional space to obtain the candidate pixels of each pixel, and the candidate pixel values are weighted and fused according to the relative position and posture relationship between each candidate pixel and the target window to obtain the pixel value of each pixel in the target window.

That is, in the embodiment of the present disclosure, for all PDUs, if there is a case where a part of the PDUs contains both geometry information and texture information and the remaining part of the PDUs contains only texture information, when rendering the target window, it is possible to choose to reconstruct the geometry picture of the target window by using only the part of the PDUs containing geometry information among all the PDUs, and to colour the target window by using texture information of all available PDUs.

Further, in the embodiment of the present disclosure, when the second indication parameter indicates that the PDU does not contain geometry information, after performing the reconstruction process according to texture information corresponding to the PDU (i.e., after the operation 103), the method of rendering process by the decoder may include the following operations.

In operation 109, PDU-geometry-absent reconstruction process is performed on the PDU that does not contain geometry information based on the reference PDU.

In operation 110, the target window is constructed based on geometry information of the PDU.

In operation 108, colouring process is performed on the target window based on texture information of the PDU to obtain a rendered picture.

In the embodiment of the present disclosure, for the PDU that does not contain geometry information, if geometry information of the PDU is reconstructed first by using geometry information of the reference PDU and then the reconstruction process of the picture is completed by combining texture information of the PDU, the PDU-geometry-absent reconstruction process may be first performed on the PDU that does not contain geometry information based on the reference PDU, so that all the PDUs contain both geometry information and texture information. The target window may be constructed based on geometry information of the PDU. The colouring process is performed on the target window based on texture information of the PDU to obtain the rendered picture.

Further, in the embodiment of the present disclosure, after the decoding process is completed, the rendering process may be further performed by using the picture information obtained after the decoding. The rendering process may include the PDU-geometry-absent reconstruction, viewpoint view restoration, and target window geometry reconstruction and pixel colouring.

It should be noted that for the PDU-geometry-absent reconstruction process, all PDUs may be traversed. If the value of pdu_geometry_absent_flag of a PDU is 1, it may be determined that the PDU lacks the geometry patch (geometry information), and the PDU-geometry-absent reconstruction process is started to be performed. Specifically, the geometry patch of the PDU may be reconstructed by using the geometry patch and the viewpoint parameter information of the reference PDU with index number pdu_geometry_reference_patch _id. After the above process, all PDUs contain the texture patch and the geometry patch.

Further, in the embodiment of the present disclosure, after the PDU-geometry-absent reconstruction process is completed, for all the PDUs, the texture patches in the PDU may be sequentially restored to the original positions of the texture view of the original viewpoint to which the texture patches belong. The geometry patches in the PDU may be sequentially restored to the original positions of the geometry view of the original viewpoint to which the geometry patches belong.

Further, in the embodiment of the present disclosure, when performing the target window geometry reconstruction and pixel colouring process, the geometry picture of the target window may be reconstructed by using the existing multi-viewpoint geometry picture restored by the viewpoint view restoration process. Each pixel in the target window is traversed, and the multi-viewpoint texture picture is restored according to the position of the pixel in the target window in three-dimensional space to obtain the candidate pixels of each pixel, and the candidate pixel values are weighted and fused according to the relative position and posture relationship between each candidate pixel and the target window to obtain the pixel value of each pixel in the target window.

That is, in the embodiment of the present disclosure, for all PDUs, if there is a case where a part of the PDUs contains both geometry information and texture information and the remaining part of the PDUs only contains texture information, when rendering the target window, the PDU-geometry-absent reconstruction process may be performed first, so that all the PDUs after the PDU-geometry-absent reconstruction process contain the geometry patch and texture patch. Finally, the geometry picture of the target window may be reconstructed by using geometry information of all the PDUs, and the target window may be coloured by using texture information of all the PDUs.

To sum up, according to the decoding method provided in the above operations 101 to 110, the decoding of the PDU that only contains texture information and does not contain geometry information can be supported, so that G geometry patches and T texture patches can be selected for expression and transmission of a non-diffuse reflection surface (G and T are integers, and 1 ≤ G < T). That is, while providing multiple pieces of texture information from different perspectives to the same region, a small amount of geometry information that is full to express the region can be transmitted, so that full and efficient expression of the non-diffuse reflection surface can be supported. The information redundancy degree of geometry data can be reduced while effectively improving the rendering quality of the surface, thereby improving the encoding efficiency when compressing the non-diffuse reflection surface.

It should be noted that in order to make the MIV standard support efficient encoding of non-diffuse reflection content, the decoding method proposed in the present disclosure introduces a mechanism that the PDU that may not contain the geometry patch.

Accordingly, on the basis of the existing MIV standard syntax structure, the decoding method provided by the present disclosure sets a syntax element supporting the PDU that does not contain the geometry patch at the atlas-sequence-level and the PDU-level, so that the PDU that does not contain the geometry patch can also be correctly decoded. Geometry information of the PDU that does not contain the geometry patch can be reconstructed from a certain PDU that contains the geometry patch.

The embodiments of the present disclosure provide a decoding method. The decoder decodes a bitstream to determine the first indication parameter, determines the second indication parameter corresponding to the PDU when the first indication parameter indicates that there is a PDU that does not contain geometry information, and performs reconstruction process based on texture information corresponding to the PDU when the second indication parameter indicates that the PDU does not contain geometry information. That is, in the embodiments of the present disclosure, whether there is a PDU that does not contain geometry information can be determined through the first indication parameter, and whether the PDU does not contain geometry information can be determined through the second indication parameter, so that transmission of different quantities of texture information and geometry information can be supported. The information redundancy degree of geometry data can be reduced while effectively improving the rendering quality through sufficient texture information, thereby realizing improvement of encoding and decoding efficiency and compression performance while satisfying the full expression of the non-diffuse reflection characteristics of the surface.

Based on the above embodiments, the decoding method provided by another embodiment of the present disclosure is used for realizing efficient encoding and rendering of the non-diffuse reflection object. Specifically, G geometry PDUs and T texture PDUs are selected for expression and transmission of the non-diffuse reflection surface (G and T are integers, and 1 ≤ G < T). In this way, while providing multiple pieces of texture information from different perspectives to the same region, a small amount of geometry information that is full to express the region can be transmitted.

Further, in the embodiment of the present disclosure, on the decoding side, the decoder can allow correct decoding of the PDU that does not contain the geometry patch. Specifically, the related syntax structure is modified on the basis of the current MIV standard, so that the modified MIV standard supports the selection of G geometry patches and T texture patches for expression and transmission of a non-diffuse reflection surface (G and T are integers, and 1 ≤ G < T).

It should be noted that in the embodiment of the present disclosure, it is possible to declare that there is no geometry patch in the current PDU by modifying the syntax.

It may be understood that, in the embodiment of the present disclosure, in the syntax structure "Atlas sequence parameter set MIV extension syntax" of the MIV standard, a syntax element asme_patch_geometry_absent_flag is added to indicate that there is a PDU in the current atlas sequence that only contains the texture patch but does not contain the geometry patch. Table 1 illustrates a first current syntax structure, and table 2 illustrates a first modified syntax structure. Based on the table 1, a syntax element asme_patch_geometry_absent_flag is added in the table 2, which is used for indicating whether there is a PDU that only contains the texture patch but does not contain the geometry patch in the current atlas sequence.

**Table 1**

| | |
|---|---|
| asps_miv_extension() { | **Descriptor** |
| **asme_ancillary_atlas flag** | u(1) |
| **asme_embedded_occupancy_enabled flag** | u(1) |
| if( asme_embedded_occupancy_enabled_flag ) | |
| **asme_depth_occ_threshold_flag** | u(1) |
| asme_geometry_scale enabled flag | u(1) |
| if( asme_geometry_scale_enabled_flag ) { | |
| **asme_geometry_scale_factor_x_minus1** | ue(v) |
| **asme_geometry_scale_factor_y_minus1** | ue(v) |
| } | |
| if( !asme_embedded_occupancy_enabled_flag ) | |
| **asme_occupancy_scale_enabled_flag** | u(1) |
| if( !asme_embedded_occupancy_enabled_flag && asme_occupa ncy_scale_enabled_flag ) { | |
| **asme_occupancy_scale_factor_x_minus1** | ue(v) |
| **asme_occupancy_scale_factor_y_minus1** | ue(v) |
| } | |
| **asme_patch_constant_depth_flag** | u(1) |
| **asme_patch_attribute_offset_enabled_flag** | u(1) |
| if( asme_patch_attribute_offset_enabled flag ) | |
| **asme_patch_attribute_offset_bit_depth_minus1** | ue(v) |
| **asme_max_entity_id** | ue(v) |
| **asme_inpaint_enabled_flag** | u(1) |
| } | |

**Table 2**

| | |
|---|---|
| asps_miv_extension() { | **Descriptor** |
| **asme_ancillary_atlas_flag** | u(1) |
| **asme_patch_geometry_absent_flag** | u(1) |
| **asme_embedded_occupancy_enabled flag** | u(1) |
| if( asme_embedded_occupancy_enabled_flag ) | |
| **asme**_**depth**_**occ**_**threshold_flag** | u(1) |
| asme_geometry_scale enabled flag | u(1) |
| if( asme_geometry_scale_enabled _flag ) { | |
| **asme_geometry_scale_factor_x_minus1** | ue(v) |
| **asme**_**geometry**_**scale**_**factor**_**y**_**minus1** | ue(v) |
| } | |
| if( !asme_embedded_occupancy_enabled_flag ) | |
| **asme_occupancy_scale_enabled_flag** | u(1) |
| if( !asme_embedded_occupancy_enabled_flag && asme_occupan cy_scale_enabled_flag ) { | |
| **asme_occupancy_scale_factor_x_minus1** | ue(v) |
| **asme_occupancy_scale_factor_y_minus1** | ue(v) |
| } | |
| **asme_patch_constant_depth_flag** | u(1) |
| **asme_patch_attribute_offset_enabled_flag** | u(1) |
| if( asme_patch_attribute_offset_enabled_flag ) | |
| **asme_patch_attribute_offset_bit_depth_minus1** | ue(v) |
| **asme_max_entity_id** | ue(v) |
| **asme_inpaint_enabled_flag** | u(1) |
| } | |

It should be noted that in the embodiment of the present disclosure, based on the above table 2, after decoding the bitstream, if it is determined that asme_patch_geometry_absent_flag is equal to 1, it may be indicated that there is pdu_geometry_absent_flag_syntax element in the patch_data_unit () syntax structure. That is, it is indicated that there is the PDU that contains only texture information but does not contain geometry information in the current atlas sequence. If it is determined that asme_patch_geometry_absent_flag is equal to 0, it may be indicated that there is no pdu_geometry_absent_flag syntax element in the patch_data_unit () syntax structure. That is, it is indicated that all PDUs in the current atlas sequence contain texture information and geometry information.

Further, in the embodiment of the present disclosure, if it is determined that there is the PDU that contains only texture information but does not contain geometry information in the current atlas sequence, the pdu_geometry_absent_flag syntax element corresponding to each PDU may be further determine by decoding.

It may be understood that in the embodiment of the present disclosure, in the syntax structure "Patch data unit MIV extension syntax" of the MIV standard, a syntax element pdu_geometry_absent_flag [tileID] [p] is added to indicate whether the current PDU contains the geometry patch as well as the texture patch, so that the decoder can identify the PDU that does not contain the geometry patch and it is not necessary to consider geometry information of the PDU in subsequent operations. Table 3 illustrates a second current syntax structure, and table 4 illustrates a second modified syntax structure. Based on the table 3, a syntax element pdu_geometry_absent_flag [tileID] [p] is added in the table 4, which is used for indicating whether the current PDU contains only the texture patch but does not contain the geometry patch.

**Table 3**

| | |
|---|---|
| pdu_miv_extension( tileID, p ) { | **Descriptor** |
| if(asme_max_entity_id > 0 ) | |
| **pdu_entity_id[** tileID ][ p ] | u(v) |
| if( asme_depth_occ_threshold_flag ) | |
| **pdu**_**depth**_**occ**_**threshold[** tileID ][ p ] | u(v) |
| if( asme_patch_attribute_offset_enabled_flag ) | |
| for( c = 0; c < 3; c++ ) { | |
| **pdu**_**attribute_offset[** tileID ][ p ][ c ] | u(v) |
| if( asme_inpaint enabled_flag ) | |
| **pdu**_**inpaint**_**flag[** tileID ][ p ] | u(1) |
| } | |

**Table 4**

| | |
|---|---|
| pdu_miv_extension( tileID, p ) { | **Descriptor** |
| if(asme_max_entity_id > 0) | |
| **pdu_entity_id**[ tileID ][ p ] | u(v) |
| if(asme_patch_geometry_absent_flag) | |
| **pdu_geometry_absent_flag**[ tileID ][ p ] | u(1) |
| else | |
| if( asme_depth_occ_threshold_flag ) | |
| **pdu_depth_occ_threshold**[ tileID ][ p ] | u(v) |
| if( asme_patch_attribute_offset_enabled_flag ) | |
| for( c = 0; c < 3; c++ ) { | |
| **pdu**_**attribute_offset**[ tileID ] [p ][ c ] | u(v) |
| if( asme_inpaint_enabled_flag ) | |
| **pdu**_**inpaint_flag**[ tileID ] [p ] | u(1) |
| } | |

It should be noted that in the embodiment of the present disclosure, based on the above table 4, if it is determined that pdu _geometry_absent flag [tileID][p] is equal to 1, it may be indicated that the geometry patch does not have valid geometry information. That is, it may be indicated that the PDU does not contain geometry information. If it is determined that pdu_geometry_absent_flag [tileID][p] is equal to 0, it may be indicated that the geometry patch has valid geometry information. That is, it may be indicated that the PDU contains geometry information.

Further, in the embodiment of the present disclosure, if it is determined that there is the PDU that contains only texture information but does not contain geometry information in the current atlas sequence, the pdu_geometry_absent_flag syntax element corresponding to each PDU may be further determine by decoding.

It can be seen that in the embodiment of the present disclosure, during the decoding process, for each atlas sequence, it may be judged whether there is a PDU that does not contain the geometry patch in the atlas sequence according to asme_patch_geometry_absent_flag. If asme_patch_geometry_absent__flag is 1, it means that there is the PDU that does not contain the geometry patch in the atlas sequence. If asme_patch_geometry_absent_flag is 0, it means that there is no PDU that does not contain the geometry patch in the atlas sequence. Next, in the process of decoding all PDUs in the atlas sequence one by one, it is judged whether the current PDU contains the geometry patch according to pdu_geometry_absent_flag. If pdu_geometry_absent_flag is 1, it means that the current PDU does not contain the geometry patch. In this case, the geometry patch in the current PDU would not be obtained from the geometry atlas during decoding. If pdu_geometry_absent_flag is 0, it means that the current PDU contains the geometry patch.

It should be noted that, in the embodiment of the present disclosure, in the current rendering process, for all PDUs, the texture patches in the PDU are sequentially restored to the original positions of the texture view of the original viewpoint to which the texture patches belong, and the geometry patches in the PDU are also sequentially restored to the original positions of the geometry view of the original viewpoint to which the geometry patches belong. However, in the present disclosure, during the process of traversing all PDUs for view restoration, if the pdu_geometry_absent_flag of the PDU is 1, only the texture patches of the PDU would be restored to the original position of the texture view of the original viewpoint to which the texture patches belong without involving any restoration operation of the geometry patches.

Further, in the embodiment of the present disclosure, when performing the target window geometry reconstruction and pixel colouring process, the geometry picture of the target window may be reconstructed by using the existing multi-viewpoint geometry picture restored in the previous operation, and then each pixel in the target window is traversed. The multi-viewpoint texture picture is restored according to the position of the pixel in the target window in three-dimensional space to obtain the candidate pixels of each pixel, and the candidate pixel values are weighted and fused according to the relative position and posture relationship between each candidate pixel and the target window to obtain the pixel value of each pixel in the target window.

That is, in the embodiment of the present disclosure, only a part of the PDUs in the PDU list contain both geometry information and texture information, and the remaining part of the PDUs only contains texture information. When rendering the target window, only the part of the PDUs containing geometry information in the PDU list are used to reconstruct the geometry picture of the target window, and texture information of all available PDUs is used to colour the target window.

The embodiments of the present disclosure provide a decoding method. The decoder decodes the bitstream to determine the first indication parameter, determines the second indication parameter corresponding to the PDU when the first indication parameter indicates that there is a PDU that does not contain geometry information, performs the reconstruction process based on texture information corresponding to the PDU when the second indication parameter indicates that the PDU does not contain geometry information. That is, in the embodiments of the present disclosure, whether there is a PDU that does not contain geometry information can be determined through the first indication parameter, and whether the PDU does not contain geometry information can be determined through the second indication parameter, so that transmission of different quantities of texture information and geometry information can be supported. The information redundancy degree of geometry data can be reduced while effectively improving the rendering quality through sufficient texture information, thereby realizing improvement of encoding and decoding efficiency and compression performance while satisfying the full expression of the non-diffuse reflection characteristics of the surface.

Based on the above embodiments, the decoding method provided by another embodiment of the present disclosure is used for realizing efficient encoding and rendering of the non-diffuse reflection object. Specifically, G geometry PDUs and T texture PDUs are selected for expression and transmission of the non-diffuse reflection surface (G and T are integers, and 1 ≤ G < T). In this way, while providing multiple pieces of texture information from different perspectives to the same region, a small amount of geometry information that is full to express the region can be transmitted.

Further, in the embodiment of the present disclosure, on the decoding side, the decoder can allow correct decoding of the PDU that does not contain the geometry patch. Specifically, the related syntax structure is modified on the basis of the current MIV standard, so that the modified MIV standard supports the selection of G geometry patches and T texture patches for expression and transmission of a non-diffuse reflection surface (G and T are integers, and 1 ≤ G < T)

sIt should be noted that in the embodiment of the present disclosure, it is possible to declare that there is no geometry patch in the current PDU by modifying the syntax. At the same time, it is indicated by modifying the syntax that geometry information of the current PDU may be reconstructed by a certain PDU that contains the geometry patch, and an index of the PDU providing the geometry reconstruction information is given by smodifying the syntax.

It may be understood that in the embodiment of the present disclosure, in the syntax structure "Atlas sequence parameter set MIV extension syntax" in the MIV standard, a syntax element asme_patch_geometry_absent_flag is added to indicate that there is a PDU that only contains the texture patch but does not contain the geometry patch in the current atlas sequence. As illustrated in the above table 2, a syntax element asme_patch_geometry_absent_flag is added, which is used for indicating whether there is a PDU that only contains the texture patch but does not contain the geometry patch in the current atlas sequence.

It should be noted that in the embodiment of the present disclosure, based on the above table 2, after decoding the bitstream, if it is determined that asme_patch_geometry_absent_flag is equal to 1, it may be indicated that there is pdu_geometry_absent_flag syntax element in the patch_data_unit () syntax structure. That is, it is indicated that there is the PDU that contains only texture information but does not contain geometry information in the current atlas sequence. If it is determined that asme_patch_geometry_absent_flag is equal to 0, it may be indicated that there is no pdu_geometry_absent_flag syntax element in the patch_data_unit () syntax structure. That is, it is indicated that all PDUs contain texture information and geometry information.

Further, in the embodiment of the present disclosure, if it is determined that there is the PDU that contains only texture information but does not contain geometry information in the current atlas sequence, the pdu_geometry_absent_flag syntax element corresponding to each PDU may be further determine by decoding.

It may be understood that in the embodiment of the present disclosure, in the syntax structure "Patch data unit MIV extension syntax" in the MIV standard, a syntax element pdu_geometry_absent_flag [tileID] [p] is added to indicate whether the current PDU contains the geometry patch as well as the texture patch, so that the decoder can identify the PDU that does not contain the geometry patch and it is not necessary to consider geometry information of the PDU in subsequent operations. Table 5 illustrates a modified syntax structure 3. Based on the table 3, a syntax element pdu_geometry_absent_flag [tileID] [p] is added in the table 5, which is used for indicating whether the current PDU contains only the texture patch but does not contain the geometry patch.

**Table 5**

| | |
|---|---|
| pdu_miv_extension( tileID, p ) { | **Descriptor** |
| if(asme_max_entity_id > 0 ) | |
| **pdu_entity_id**[ tileID ][ p ] | u(v) |
| if(asme_patch_geometry_absent_flag) | |
| **pdu_geometry_absent_flag**[ tileID ][ p ] | u(1) |
| if( **pdu**_**geometry**_**absent**_**flag**[ tileID ][ p ] ) | |
| **pdu**_**geometry**_**reference**_**patch**_**id**[ tileID ][ p ] | u(v) |
| else | |
| if( asme_depth_occ_threshold_flag ) | |
| **pdu_depth_occ_threshold**[ tileID ][ p ] | u(v) |
| if( asme_patch_attribute_offset_enabled _flag) | |
| for( c = 0; c < 3; c++ ) { | |
| **pdu**_**attribute**_**offset**[ tileID ] [p ][ c ] | u(v) |
| if( asme_inpaint_enabled_flag ) | |
| **pdu**_**inpaint**_**flag**[ tileID ][ p ] | u(1) |
| } | |

It should be noted that in the embodiment of the present disclosure, based on the above table 5, if it is determined that pdu_geometry_absent flag [tileID] [p] is equal to 1, it may be indicated that the geometry patch does not have valid geometry information, that is, it may be indicated that the PDU does not contain geometry information. If it is determined that pdu_geometry_absent_flag [tileID][p] is equal to 0, it may be indicated that the geometry patch has valid geometry information, that is, it may be indicated that the PDU contains geometry information.

It may be understood that, in the embodiment of the present disclosure, in the syntax structure "Patch data unit MIV extension syntax" in the MIV standard, after it is clear that the current PDU does not contain the geometry patch, that is, when it is determined that pdu_geometry_absent_flag [tileID][p] is equal to 1, a syntax element pdu_geometry_reference_patch _id [tileID][p] is added to give the index number of the geometry reconstruction reference PDU. By using the geometry patch in the PDU which is pointed by the index number, the absent geometry information of the current PDU can be reconstructed.

It can be seen that in the embodiment of the present disclosure, during the decoding process, for each atlas sequence, it may be judged whether there is a PDU that does not contain the geometry patch in the atlas sequence according to asme_patch_geometry_absent_flag. If asme_patch_geometry_absent_flag is 1, it means that there is the PDU that does not contain the geometry patch in the atlas sequence. If asme_patch_geometry_absent_flag is 0, it means that there is no PDU that does not contain the geometry patch in the atlas sequence. Next, in the process of decoding all PDUs in the atlas sequence one by one, it is judged whether the current PDU contains the geometry patch according to pdu_geometry_absent flag. If pdu_geometry_absent_flag is 1, it means that the current PDU does not contain the geometry patch. In this case, the geometry patch in the current PDU would not be obtained from the geometry atlas during decoding, but the index number pdu_geometry _reference_patch _id of the geometry reconstruction reference PDU of the current PDU would be determined. At this time, the geometry patch of the reference PDU pointed to by the index number would be acquired according to the index number. If pdu_geometry_absent_flag is 0, it means that the current PDU contains the geometry patch.

It should be noted that, in the embodiment of the present disclosure, all PDUs are traversed. If the pdu_geometry_absent flag of the current PDU is 1, it means that the current PDU lacks the geometry patch, and the PDU-geometry-absent reconstruction process is started to be performed. That is, the geometry patch of the current PDU is reconstructed by using the geometry patch and viewpoint parameter information in the PDU with the index number of pdu_geometry _reference_patch _id. After this process, all PDUs contain texture patches and geometry patches.

Further, in the embodiment of the present disclosure, after the PDU-geometry-absent reconstruction process is completed, for all the PDUs, the texture patches in the PDU are sequentially restored to the original positions of the texture view of the original viewpoint to which the texture patches belong, and the geometry patches in the PDU are also sequentially restored to the original positions of the geometry view of the original viewpoint to which the geometry patches belong.

Further, in the embodiment of the present disclosure, when performing the target window geometry reconstruction and pixel colouring process, the geometry picture of the target window may be reconstructed by using the existing multi-viewpoint geometry picture restored in the previous operation, and then each pixel in the target window is traversed. The multi-viewpoint texture picture is restored according to the position of the pixel in the target window in three-dimensional space to obtain the candidate pixels of each pixel, and the candidate pixel values are weighted and fused according to the relative position and posture relationship between each candidate pixel and the target window to obtain the pixel value of each pixel in the target window.

That is, in the embodiment of the present disclosure, all the PDUs in the PDU list after the PDU-geometry-absent reconstruction contain the geometry patch and the texture patch. When rendering the target window, the target window geometry picture may be reconstructed by using geometry information in all the available PDUs, and the target window may be coloured by using texture information of all the available PDUs.

The embodiments of the present disclosure provide a decoding method. The decoder decodes the bitstream to determine the first indication parameter, determines the second indication parameter corresponding to the PDU when the first indication parameter indicates that there is a PDU that does not contain geometry information, performs the reconstruction process based on texture information corresponding to the PDU when the second indication parameter indicates that the PDU does not contain geometry information. That is, in the embodiments of the present disclosure, whether there is a PDU that does not contain geometry information can be determined through the first indication parameter, and whether the PDU does not contain geometry information can be determined through the second indication parameter, so that transmission of different quantities of texture information and geometry information can be supported. The information redundancy degree of geometry data can be reduced while effectively improving the rendering quality through sufficient texture information, thereby realizing improvement of encoding and decoding efficiency and compression performance while satisfying the full expression of the non-diffuse reflection characteristics of the surface.

Based on the above embodiment, the encoding method proposed in the present disclosure selectively uses G geometry patches and T texture patches for expression and transmission of the non-diffuse reflection surface during encoding (G and T are integers, and 1 ≤ G < T), which means that there would be PDUs that do not contain the geometry patches during encoding.

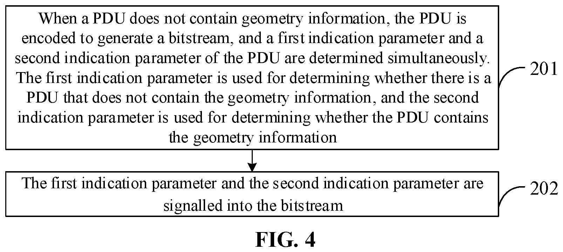

An embodiment of the present disclosure provides an encoding method, which is applied to an encoder. FIG. 4 is a diagram of an implementation flow of an encoding method. As illustrated in FIG. 4, the encoding method performed by the encoder may include the following operations.

In operation 201, when a PDU does not contain geometry information, the PDU is encoded to generate a bitstream, and a first indication parameter and a second indication parameter of the PDU are determined simultaneously. The first indication parameter is used for determining whether there is a PDU that does not contain geometry information, and the second indication parameter is used for determining whether the PDU contains geometry information.

In operation 202, the first indication parameter and the second indication parameter are signalled into the bit stream.

In the embodiment of the present disclosure, if there is a PDU that does not contain geometry information, the encoder encodes the PDU to generate the bitstream. At the same time, the encoder determines the first indication parameter and the second indication parameter for each PDU, and then signals the first indication parameter and the second indication parameter into the bitstream.

Further, in the embodiment of the present disclosure, the first indication parameter may be a sequence-level indication parameter or a picture-level indication parameter.

It should be noted that in the embodiment of the present disclosure, the first indication parameter may indicate whether there is at least one PDU that does not contain geometry information among all PDUs corresponding to the current atlas sequence. That is, the first indication parameter may be used to determine whether there is a PDU that does not contain geometry information in the current atlas sequence.

It should be noted that in the embodiment of the present disclosure, the first indication parameter may indicate whether there exist at least one PDU that does not contain geometry information among all PDUs corresponding to the current atlas. That is, the first indication parameter may be used to determine whether there is a PDU that does not contain geometry information in the current atlas.

It may be understood that in the embodiment of the present disclosure, the first indication parameter may be understood as a flag indicating whether there is a PDU that only contains texture information but does not contain geometry information. Specifically, the decoder may determine a variable as the first indication parameter, so that the determination of the first indication parameter may be implemented through the value of the variable. The value of the first indication parameter may be the first value or the second value.

It should be noted that, in the embodiment of the present disclosure, if it is determined that there is the PDU that does not contain geometry information in the current atlas sequence, the value of the first indication parameter may be determined as the first value. If it is determined that there is no PDU that does not contain geometry information in the current atlas sequence, that if it is determined that all PDUs in the current atlas sequence contain geometry information, the value of the first indication parameter may be determined as the second value.

It should be noted that, in the embodiment of the present disclosure, if it is determined that there is the PDU that does not contain geometry information in the current atlas, the value of the first indication parameter may be determined as the first value. If it is determined that there is no PDU that does not contain geometry information in the current atlas, that is, if it is determined that all PDUs in the current atlas contain geometry information, the value of the first indication parameter may be determined as the second value.

It may be understood that in the embodiment of the present disclosure, the first value may be set to 1 and the second value may be set to 0. Alternatively, the first value may be set to true and the second value may be set to false. The first value and the second value are not specifically limited in the present disclosure.

Further, in the embodiment of the present disclosure, the flag asme_patch_geometry_absent_flag may be used to represent the first indication parameter. For example, in the present disclosure, if there is the PDU that does not contain the geometry patch, that is, if there is at least one PDU that only contains texture information but does not contain geometry information, the value of asme_patch_geometry_absent_flag may be set to 1. If there does not exist PDU that does not cosntain the geometry patch, that is, if all PDUs contain texture information and geometry information, the value of asme_patch_geometry_absent_flag may be set to 0.

Further, in the embodiment of the present disclosure, the current atlas sequence may be an atlas sequence currently to be encoded. Specifically, the atlas sequence may include geometry information or texture information corresponding to one or more PDUs. That is, the atlas sequence may include one or more geometry PDU pictures or texture PDU pictures corresponding to one or more PDUs.

It may be understood that, in the embodiment of the present disclosure, for any PDU of the current atlas sequence, the PDU may contain both geometry information and texture information. Alternatively, the PDU may only contain texture information and does not contain geometry information.

It can be understood that in the embodiment of the present disclosure, for any PDU in the current atlas, the PDU may contain both geometry information and texture information. Alternatively, the PDU may contain only texture information and does not contain geometry information.

Further, in the embodiment of the present disclosure, for different cases where a PDU contains or does not contain geometry information, different methods may be selected to encode the PDU. Thereore, it is necessary to determine the first indication parameter for indicating whether there is a PDU that does not contain geometry information.

It should be noted that in the embodiment of the present disclosure, the second indication parameter may indicate whether the corresponding PDU does not contain geometry information. That is, the second indication parameter may be used to determine whether the PDU contains geometry information. Each PDU corresponds to one second indication parameter.

It can be understood that in embodiments of the present disclosure, the second indication parameter may be understood as a flag indicating whether the PDU only contains texture information but does not contain geometry information. In particular, the encoder may determine a variable as the second indication parameter, so that the determination of the second indication parameter may be implemented through the value of the variable. The value of the second indication parameter may be the first value or the second value.

It should be noted that in the embodiment of the present disclosure, if it is determined that the corresponding PDU does not contain geometry information, the value of the second indication parameter may be determined as the first value. If it is determined that the corresponding PDU contains geometry information, the value of the second indication parameter may be determined as the second value.

It may be understood that in the embodiment of the present disclosure, the first value may be set to 1 and the second value may be set to 0. Alternatively, the first value may be set to true and the second value may be set to false. The first value and the second value are not specifically limited in the present disclosure.

Further, in the embodiment of the present disclosure, the flag pdu_geometry_absent_flag may be used to represent the second indication parameter. For example, in the present disclosure, if the corresponding PDU does not contain the geometry patch, that is, if the corresponding PDU only contains texture information but does not contain geometry information, the value of pdu_geometry_absent_flag may be set to 1. If the corresponding PDU contains the geometry patch, that is, if the corresponding PDU contains texture information and geometry information, the value of pdu_geometry_absent_flag may be set to 0.

It should be noted that in the embodiment of the present disclosure, the current atlas sequence may include at least one sub-atlas, and each sub-atlas includes at least one PDU. Accordingly, the second indication parameter may be represented by using the flag pdu_geometry_absent_flag [tileID] [p], and tileID and p may be an identifier of a PDU. For example, in the present disclosure, if the value of pdu_geometry_absent_flag [tileID][p] is 1, it may be indicated that the p-th PDU in the sub-atlas with tileID does not contain the geometry patch, that is, the p-th PDU in the sub-atlas with tileID contains only texture information but does not contain geometry information. If the value of pdu_geometry_absent_flag [tileID] [p] is 0, it may be indicated that the p-th PDU in the sub-atlas with tileID contains the geometry patch, that is, the p-th PDU in the sub-atlas with tileID contains texture information and geometry information.

Further, in the embodiment of the present disclosure, if there is a PDU that does not contain geometry information, encoding process may be further performed according to texture information corresponding to the PDU to generate the bitstream.

It should be noted that in the embodiment of the present disclosure, if it is determined that the PDU only contains texture information but does not contain geometry information, texture information corresponding to the PDU may be determined first, and then the PDU may be encoded by using texture information to generate the bitstream.

Further, in the embodiment of the present disclosure, when determining the encoded PDU corresponding to the PDU based on texture information corresponding to the PDU, the encoding process may be completed by using only texture information. Alternatively, geometry information of the PDU may be first determined by using geometry information of the reference PDU, and then the encoding process of the picture may be completed in combination with texture information of the PDU.

It may be understood that in the present disclosure, one embodiment is that when the PDU does not contain geometry information, texture information corresponding to the PDU may be determined first, and then, the PDU is encoded according to texture information to generate the bitstream. In the encoding process, the encoding process is performed only on texture information of the PDU.

It should be noted that, in the embodiment of the present disclosure, if the PDU contains only the texture patch (texture information) but does not contain the geometry patch (geometry information), that is, if it is determined that the PDU does not contain geometry information, it is not necessary to obtain geometry information, but only the corresponding texture information is obtained. Accordingly, in the subsequent encoding process of the picture, geometry information of the PDU is not considered, and the encoding process is performed only according to the corresponding texture information.

It may be understood that in the present disclosure, one embodiment is that when the PDU does not contain thes geometry information, texture information corresponding to the PDU and the reference patch may be determined first, and then the first geometry information corresponding to the PDU is determined according to the reference patch. Finally, the PDU may be encoded according to the texture information and the first geometry information to generate the bitstream. The encoding process may be performed on the texture information and geometry information of the PDU.

It should be noted that, in the embodiment of the present disclosure, if the PDU only contains the texture patch (texture information) and does not contain the geometry patch (geometry information), that is, if it is determined that the PDU does not contain geometry information, it is necessary to first determine geometry information according to the reference PDU and at the same time determine the corresponding texture information. Accordingly, in the subsequent encoding process of the picture, the encoding process may be performed in combination with texture information of the PDU and the determined geometry information (first geometry information).

Further, in the embodiment of the present disclosure, a reference PDU corresponding to the PDU may be determined first, and then the first geometry information corresponding to the PDU may be determined according to the reference PDU.

It should be noted that in the embodiment of the present disclosure, the encoder may further determine the identification information of the reference PDU and signal the identification information into the bitstream. The identification information may represent the index number of the reference PDU. For example, identification information may be represented by using pdu_geometry _reference_patch _id [tileID] [p], and tileID and p may be indexes of the reference PDU. The reference PDU may be pointed to a p-th PDU in the sub-atlas with tileID through the identification information pdu_geometry_absent_flag [tileID] [p].

It may be understood that in the embodiment of the present disclosure, after the corresponding reference PDU is determined, the second geometry information corresponding to the reference PDU may be further determined, and then geometry information of the PDU may be determined by using the second geometry information, that is, the first geometry information corresponding to the PDU may be determined.

That is, in the embodiment of the present disclosure, if it is determined that the PDU does not contain geometry information, the first geometry information of the PDU may be determined by using the second geometry information of the reference PDU, so that encoding process may be performed based on the texture information and the first geometry information of the PDU to generate the bit stream.

It may be understood that in the embodiment of the present disclosure, the encoder may signal the first indication parameter into the bitstream. The encoder may further signal the second indication parameter into the bitstream when the first indication parameter indicates that there is the PDU that does not contain geometry information. The encoder may further signal the identification information into the bitstream when the second indication parameter indicates that the PDU does not contain geometry information.

Further, in the embodiment of the present disclosure, the encoding method of the encoder may further include the following operations.

In operation 204, when all PDUs contain geometry information, texture information and the first geometry information corresponding to the PDUs are determined.

In the embodiment of the present disclosure, if all PDUs contain geometry information, the respective texture information and the respective first geometry information corresponding to each one of the PDUs may be further determined.

It may be understood that, in the embodiment of the present disclosure, if it is determined that each PDU contains the respective geometry patch (geometry information) and the respective texture patch (texture information), texture information and the first geometry information corresponding to the PDU may be directly determined.

That is, in the embodiment of the present disclosure, if all PDUs contain geometry information, texture information and the first geometry information of the PDUs may be directly obtained.

In operation 205, the PDU is encoded according to the texture information and the first geometry information to generate the bitstream.

In the embodiment of the present disclosure, after determining the texture information and the first geometry information corresponding to the PDU, the PDU may be encoded according to the texture information and the first geometry information to generate the bitstream.

It should be noted that, in the embodiment of the present disclosure, for a PDU that contains both texture information and the first geometry information, the corresponding texture information and first geometry information may be used to complete encoding process directly.

Further, in the embodiment of the present disclosure, the encoding method performed by the encoder may further include the following operations.

In operation 206, when the PDU contains geometry information, texture information and the first geometry information corresponding to the PDU may be determined.

In the embodiment of the present disclosure, if it is determined that the PDU contains geometry information, texture information and the first geometry information corresponding to the PDU may be further determined.

It may be understood that in the embodiment of the present disclosure, if it is determined that the PDU contains both the geometry patch (geometry information) and the texture patch (texture information), texture information and the first geometry information corresponding to the PDU may be directly determined.

That is, in the embodiment of the present disclosure, if there is a PDU that does not contain geometry information, for each PDU, whether the PDU contains geometry information may be further determined. If the PDU contains geometry information, that is, for the PDU that contains both geometry information and texture information, texture information and the first geometry information of the PDU may be directly obtained.

In operation 205, the PDU is encoded according to the texture information and the first geometry information to generate the bitstream.

In the embodiment of the present disclosure, after determining texture information and the first geometry information corresponding to the PDU, the PDU may be encoded according to the texture information and the first geometry information to generate the bitstream.

Further, in the embodiment of the present disclosure, the method of the rendering process performed by the encoder may include the following operations.

In operation 207, a target window is constructed based on the PDU that contains geometry information.

In the operation 208, colouring process is performed on the target window based on texture information of the PDU to obtain a rendered picture.

In the embodiment of the present disclosure, for the PDU that does not contain geometry information, if only the texture information is used to complete encoding process, a target window may be further constructed based on the PDU that contains geometry information, and then the colouring process is performed on the target window based on texture information of the PDU to obtain the rendered picture.

Further, in the embodiment of the present disclosure, after the encoding process is completed, the rendering process may be further performed by using picture information obtained after the encoding. The rendering process may include two processes: the process of viewpoint view restoration, and the process of target window geometry reconstruction and pixel colouring.

It should be noted that, for the process of the viewpoint view restoration, a common manner is that for all PDUs, the texture patches in the PDU are sequentially restored to the original positions of the texture view of the original viewpoint to which the texture patches belong, and the geometry patches in the PDU are sequentially restored to the original positions of the geometry view of the original viewpoint to which the geometry patches belong. In the present disclosure, during the process of traversing all PDUs for the view restoration, if the first indication parameter indicates that all the PDUs contain both geometry information and texture information, or if the second indication parameter indicates that the corresponding PDU contains both geometry information and texture information, the viewpoint view restoration process may be performed on the PDU in the above common manner. However, for a PDU where the second indication parameter indicates that the PDU does not contain geometry information and only contains texture information (i.e. for a PDU of which the pdu_geometry_absent_flag value is 1), it is possible to choose to restore only the texture patches of the PDU to the original position of the texture view of the original viewpoint to which the texture patches belong, without involving any restoration operation of the geometry patches.

Further, in the embodiment of the present disclosure, when performing the target window geometry reconstruction and pixel colouring process, the geometry picture of the target window may be reconstructed by using the existing multi-viewpoint geometry picture restored by the viewpoint view restoration process. Each pixel in the target window is traversed, and the multi-viewpoint texture picture is restored according to the position of the pixel in the target window in three-dimensional space to obtain the candidate pixels of each pixel, and the candidate pixel values are weighted and fused according to the relative position and posture relationship between each candidate pixel and the target window to obtain the pixel value of each pixel in the target window.

That is, in the embodiment of the present disclosure, for all PDUs, if there is a case where a part of the PDUs contains both geometry information and texture information and the remaining part of the PDUs contains only texture information, when rendering the target window, it is possible to choose to reconstruct the geometry picture of the target window by using only the part of the PDUs containing geometry information among all the PDUs, and to colour the target window by using texture information of all available PDUs.

Further, in the embodiment of the present disclosure, the method of rendering process performed by the encoder may include the following operations.

In operation 209, PDU-geometry-absent reconstruction process is performed on the PDU that does not contain geometry information based on the reference PDU.

In operation 210, a target window is constructed based on geometry information of the PDU.

In operation 208, colouring process is performed on the target window based on texture information of the PDU to obtain a rendered picture.

In the embodiment of the present disclosure, for the PDU that does not contain geometry information, if geometry information of the PDU is restored first by using geometry information of the reference PDU, and then the encoding process of the picture is completed by combining texture information of the PDU. The restoration of the geometry-absent PDU may be performed firstly on the PDU that does not contain geometry information based on the reference PDU, so that all the PDUs contain both geometry information and texture information. The target window may be constructed based on geometry information of the PDU. Then the colouring process is performed on the target window based on texture information of the PDU to obtain the rendered picture.

Further, in the embodiment of the present disclosure, after the encoding process is completed, the rendering process may be further performed by using the picture information obtained after the encoding. The rendering process may include the PDU-geometry-absent reconstruction, the viewpoint view restoration, and the target window geometry reconstruction and pixel colouring.

It should be noted that for the PDU-geometry-absent reconstruction process, all PDUs may be traversed. If it is determined that the PDU lacks the geometry patch (geometry information), the restoration of the geometry-absent PDU is started to be performed. Specifically, the geometry patch of the PDU may be restored by using the geometry patch and the viewpoint parameter information of the reference PDU. After the above process, all PDUs contain the texture patches and the geometry patches.

Further, in the embodiment of the present disclosure, after determination of the geometry-absent PDU is completed, for all the PDUs, the texture patches in the PDU may be sequentially restored to the original positions of the texture view of the original viewpoint to which the texture patches belong, and the geometry patches in the PDU may be sequentially restored to the original positions of the geometry view of the original viewpoint to which the geometry patches belong.

Further, in the embodiment of the present disclosure, when performing the target window geometry reconstruction and pixel colouring process, the geometry picture of the target window may be reconstructed by using the existing multi-viewpoint geometry picture restored by the viewpoint view restoration process. Each pixel in the target window is traversed, and the multi-viewpoint texture picture is restored according to the position of the pixel in the target window in three-dimensional space to obtain the candidate pixels of each pixel, and the candidate pixel values are weighted and fused according to the relative position and posture relationship between each candidate pixel and the target window to obtain the pixel value of each pixel in the target window.

That is, in the embodiment of the present disclosure, for all PDUs, if there is a case where a part of the PDUs contains both geometry information and texture information and the remaining part of the PDUs only contains texture information, when rendering the target window, the PDU-geometry-absent reconstruction process may be performed first, so that all the PDUs after the PDU-geometry-absent reconstruction process contain the geometry patch and texture patch. Finally, the geometry picture of the target window may be reconstructed by using geometry information of all the PDUs, and the target window may be coloured by using texture information of all the PDUs.

To sum up, in the encoding method proposed in the above operations 201 to 210, G geometry patches and T texture patches are selected for the expression and transmission for the non-diffuse reflection surface during the encoding (G and T are integers, and 1 ≤ G < T), which means that there is a PDU that does not contain geometry patch during the encoding. That is, while providing multiple pieces of texture information from different perspectives to the same region, a small amount of geometry information that is full to express the region can be transmitted, so that full and efficient expression of the non-diffuse reflection surface can be supported. The information redundancy degree of geometry data can be reduced while effectively improving the rendering quality of the surface, thereby improving the encoding efficiency when compressing the non-diffuse reflection surface.

It should be noted that in order to make the MIV standard support efficient encoding of non-diffuse reflection content, the encoding method proposed in the present disclosure introduces a mechanism that the PDU does not contain the geometry patch.

Accordingly, on the basis of the existing MIV standard syntax structure, the encoding method provided by the present disclosure sets a syntax element supporting the PDU that does not contain the geometry patch at the atlas-sequence-level and the PDU-level, so that the PDU that does not contain the geometry patch can also be correctly encoded.

In the encoding method provided by the embodiment of the present disclosure, when a PDU does not contain geometry information, the PDU is encoded to generate a bitstream, and the first indication parameter and the second indication parameter of the PDU are determined simultaneously. The first indication parameter is used for determining whether there is a PDU that does not contain geometry information, and the second indication parameter is used for determining whether the PDU contains geometry information. The first indication parameter and the second indication parameter are signalled in the bitstream. That is, in the embodiments of the present disclosure, whether there is a PDU that does not contain geometry information can be determined through the first indication parameter, and whether the PDU does not contain geometry information can be determined through the second indication parameter, so that transmission of different quantities of texture information and geometry information can be supported. The information redundancy degree of geometry data can be reduced while effectively improving the rendering quality through sufficient texture information, thereby realizing improvement of encoding and decoding efficiency and compression performance while satisfying the full expression of the non-diffuse reflection characteristics of the surface.

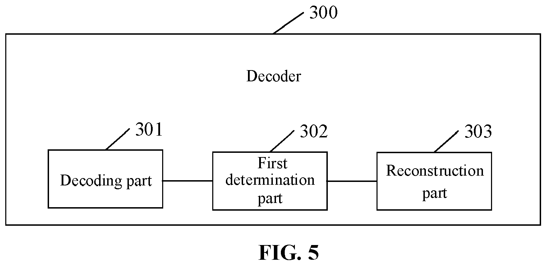

Based on the above embodiments, in another embodiment of the present disclosure, FIG. 5 is a first diagram of a composition structure of a decoder provided in the embodiment of the present disclosure. As illustrated in FIG. 5, the decoder 300 provided by an embodiment of the present disclosure may include a decoding part 301, a first determination part 302 and a reconstruction part 303.

The decoding part 301 is configured to decode a bitstream.

The first determination part 302 is configured to determine a first indication parameter, and determine a second indication parameter corresponding to the PDU when the first indication parameter indicates that there is a PDU that does not contain geometry information.

The reconstruction part 303 is configured to perform reconstruction process based on texture information corresponding to the PDU when the second indication parameter indicates that the PDU does not contain geometry information.

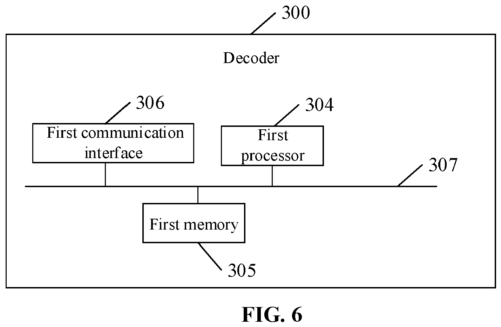

FIG. 6 is a second diagram of a composition structure of an encoder provided by an embodiment of the present disclosure. As illustrated in FIG. 6, the decoder 300 provided in the embodiment of the present disclosure may further include a first processor 305, a first memory 305 having stored thereon instructions executable by the first processor 305, a first communication interface 306, and a first bus 307 for connecting the first processor 305, the first memory 305 and the first communication interface 306.

Further, in the embodiment of the present disclosure, the first processor 305 is configured to decode the bitstream to determine the first indication parameter, determine a second indication parameter corresponding to the PDU when the first indication parameter indicates that there is a PDU that does not contain geometry information, and perform reconstruction process based on texture information corresponding to the PDU when the second indication parameter indicates that the PDU does not contain geometry information.

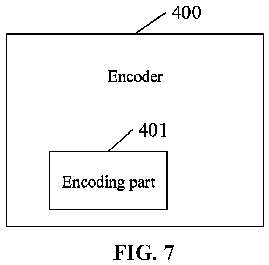

FIG. 7 is a first diagram of a composition structure of a decoder provided by an embodiment of the present disclosure. As illustrated in FIG. 7, the encoder 400 provided by the embodiment of the present disclosure includes an encoding part 401.

The encoding part 401 is configured to, when a PDU does not contain geometry information, encode the PDU to generate a bitstream, simultaneously determine a first indication parameter and a second indication parameter of the PDU, and signal the first indication parameter and the second indication parameter into the bitstream. The first indication parameter is used for determining whether there is a PDU that does not contain geometry information, and the second indication parameter is used for determining whether the PDU contains geometry information.

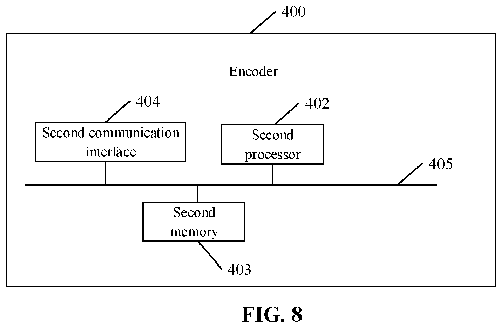

FIG. 8 is a second diagram of a composition structure of a decoder provided by an embodiment of the present disclosure. As illustrated in FIG. 8, the encoder 400 provided by the embodiment of the present disclosure may further include a second processor 402, a second memory 403 having stored thereon instructions executable by the second processor 402, a second communication interface 404, and a second bus 405 for connecting the second processor 402, the second memory 403 and the second communication interface 404.

Further, in the embodiment of the present disclosure, the second processor 402 is configured to encode the PDU to generate the bitstream when the PDU does not contain geometry information, simultaneously determine the first indication parameter and the second indication parameter of the PDU, and signal the first indication parameter and the second indication parameter into the bitstream. The first indication parameter is used for determining whether there is a PDU that does not contain geometry information, and the second indication parameter is used for determining whether the PDU contains geometry information.

In addition, various functional modules in the present embodiment may be integrated in one processing unit. Alternatively, various units may exist physically alone, or two or more units may be integrated in one unit. The above integrated unit may be realized either in the form of hardware or in the form of software function module.

When the integrated unit is implemented in form of the software function module rather than sold or used as an independent product, the integrated unit may be stored in a computer-readable storage medium. Based on such understanding, the technical solution of the embodiment substantially or parts making contributions to the related art, or all or part of the technical solution may be embodied in form of a software product. The computer software product may be stored in a storage medium and ma include several instructions to enable a computer device (which may be a personal computer, a server, a network device, etc.) or a processor to execute all or part of operations of the method described in the embodiment. The foregoing storage medium may include various media capable of storing program codes, such as a U disk, a mobile hard disk, a Read Only Memory (ROM), a Random Access Memory (RAM), a magnetic disk, or an optical disk, etc.

The embodiments of the present disclosure provide an encoder and a decoder. Whether there is a PDU that does not contain geometry information can be determined through the first indication parameter, and whether the PDU does not contain geometry information can be determined through the second indication parameter, so that transmission of different quantities of texture information and geometry information can be supported. The information redundancy degree of geometry data can be reduced while effectively improving the rendering quality through sufficient texture information, thereby realizing improvement of encoding and decoding efficiency and compression performance while satisfying the full expression of the non-diffuse reflection characteristics of the surface.

The embodiment of the present disclosure provides a computer-readable storage medium having stored thereon a program that, when executed by a processor, implements the method described in the above-described embodiments.

Specifically, the program instruction corresponding to a decoding method in the embodiment may be stored on a storage medium such as an optical disk, a hard disk, a U disk, etc. When the program instruction corresponding to a decoding method in the storage medium is read or executed by an electronic device, the following operations are performed.

A bitstream is decoded to determine a first indication parameter.

When the first indication parameter indicates that there is a PDU that does not contain geometry information, a second indication parameter corresponding to the PDU is determined.

When the second indication parameter indicates that the PDU does not contain geometry information, reconstruction process is performed based on texture information corresponding to the PDU.

When the program instruction corresponding to an encoding method in the storage medium is read or executed by an electronic device, the following operations are performed.

When a PDU does not contain geometry information, the PDU is encoded to generate a bitstream, and a first indication parameter and a second indication parameter of the PDU are determined simultaneously. The first indication parameter is used for determining whether there is a PDU that does not contain geometry information, and the second indication parameter is used for determining whether the PDU contains geometry information.

The first indication parameter and the second indication parameter are signalled into the bitstream.

Those skilled in the art would appreciate that embodiments of the present disclosure may be provided as methods, systems or computer program products. Accordingly, the present disclosure may be in the form of hardware embodiments, software embodiments or embodiments combining software and hardware aspects. Further, the present disclosure may be in the form of a computer program product implemented on one or more computer-usable storage medium (which may include, but is not limited to, a disk storage, an optical storage, etc.) containing computer-usable program code therein.

The present disclosure is described with reference to implementation flowcharts and/or block diagrams of the methods, the devices (systems), and the computer program products according to the embodiments of the present disclosure. It should be understood that each one of the flows and/or blocks in the flowcharts and/or block diagrams, as well as combinations thereof, may be implemented by computer program instructions. These computer program instructions may be provided to a processor of a general purpose computer, a special purpose computer, an embedded processor, or other programmable data processing device to generate a machine, such that instructions executed by the processor of the computer or other programmable data processing device generate devices for implementing the functions specified in one or more flows of the flowchart and/or one or more blocks of the block diagram.

These computer program instructions may also be stored in a computer-readable memory capable of directing a computer or other programmable data processing device to operate in a specific manner, such that the instructions stored in the computer-readable memory produce a manufacturing product including instruction devices that perform the functions specified in one or more flows of the flowchart and/or one or more blocks of the block diagram.

These computer program instructions may also be loaded onto a computer or other programmable data processing device, such that a series of operations are executed on the computer or other programmable device to produce computer-implemented processing, and the instructions executed on the computer or other programmable device provide operations for implementing the functions specified in one or more flows of the flowchart and/or one or more blocks of the block diagram.

The foregoing is only a preferred embodiment of the present disclosure and is not intended to limit the scope of protection of the present disclosure.

### INDUSTRIAL PRACTICALITY

The embodiments of the present disclosure provide an encoding and decoding method, an encoder, a decoder and a storage medium. The decoder decodes a bitstream to determine the first indication parameter, determines the second indication parameter corresponding to the PDU when the first indication parameter indicates that there is a PDU that does not contain geometry information, and performs reconstruction process based on texture information corresponding to the PDU when the second indication parameter indicates that the PDU does not contain geometry information. When a PDU does not contain geometry information, the PDU is encoded to generate a bitstream, and the first indication parameter and the second indication parameter of the PDU are simultaneously determined. The first indication parameter is used for determining whether there is a PDU that does not contain geometry information, and the second indication parameter is used for determining whether the PDU contains geometry information. The first indication parameter and the second indication parameter are signalled into the bitstream. That is, in the embodiments of the present disclosure, whether there is a PDU that does not contain geometry information can be determined through the first indication parameter, and whether the PDU does not contain geometry information can be determined through the second indication parameter, so that transmission of different quantities of texture information and geometry information can be supported. The information redundancy degree of geometry data can be reduced while effectively improving the rendering quality through sufficient texture information, thereby realizing improvement of encoding and decoding efficiency and compression performance while satisfying the full expression of the non-diffuse reflection characteristics of the surface.

## Claims

1. A decoding method, applied to a decoder, comprising:
decoding a bitstream to determine a first indication parameter;
when the first indication parameter indicates that there is a Patch Data Unit (PDU) that does not contain geometry information, determining a second indication parameter corresponding to the PDU; and
when the second indication parameter indicates that the PDU does not contain geometry information, performing reconstruction process based on texture information corresponding to the PDU.

2. The method of claim 1, wherein when the first indication parameter indicates that there is a PDU that does not contain geometry information in a current atlas sequence, a second indication parameter corresponding to the PDU in the current atlas sequence is determined.

3. The method of claim 1, wherein when the first indication parameter indicates that there is a PDU that does not contain geometry information in a current atlas, a second indication parameter corresponding to the PDU in the current atlas is determined.

4. The method of claim 2 or 3, wherein when the second indication parameter indicates that the PDU does not contain geometry information, performing the reconstruction process based on texture information corresponding to the PDU comprises:
when the second indication parameter indicates that the PDU does not contain geometry information, determining texture information corresponding to the PDU; and
performing the reconstruction process on the PDU based on the texture information.

5. The method of claim 2 or 3, wherein when the second indication parameter indicates that the PDU does not contain geometry information, performing the reconstruction process based on texture information corresponding to the PDU comprises:
when the second indication parameter indicates that the PDU does not contain geometry information, determining texture information corresponding to the PDU and identification information of a reference PDU; and
determining first geometry information corresponding to the PDU based on the identification information; and
performing the reconstruction process on the PDU based on the texture information and the first geometry information.

6. The method of claim 5, wherein determining the first geometry information corresponding to the PDU based on the identification information comprises:
determining second geometry information of the reference PDU based on the identification information; and
reconstructing the first geometry information by using the second geometry information.

7. The method of claim 2 or 3, further comprising:
when the first indication parameter indicates that all PDUs contain geometry information, determining texture information and first geometry information corresponding to the PDUs; and
performing the reconstruction process on the PDUs based on the texture information and the first geometry information.

8. The method of claim 2 or 3, further comprising:
when the second indication parameter indicates that the PDU contains geometry information, determining texture information and first geometry information corresponding to the PDU; and
performing the reconstruction process on the PDU based on the texture information and the first geometry information.

9. The method of claim 4, further comprising:
constructing a target window based on the PDU that contains geometry information; and
performing colouring process on the target window based on the texture information of the PDU to obtain a rendered picture.

10. The method of claim 5, further comprising:
performing PDU-geometry-absent reconstruction process on the PDU that does not contain geometry information based on the reference PDU;
constructing a target window based on geometry information of the PDU; and
performing colouring process on the target window based on the texture information of the PDU to obtain a rendered picture.

11. The method of claim 1, wherein when a value of the first indication parameter is a first value, the first indication parameter indicates there is the PDU that does not contain geometry information; and
when the value of the first indication parameter is a second value, all PDUs indicated by the first indication parameter contain geometry information.

12. The method of claim 1, wherein when a value of the second indication parameter is a first value, the second indication parameter indicates that the PDU does not contain geometry information; and
when the value of the second indication parameter is a second value, the second indication parameter indicates that the PDU contains geometry information.

13. The method of claim 11 or 12, wherein the first value is 1 and the second value is 0; or
the first value is set to true and the second value is set to false.

14. An encoding method, applied to an encoder, comprising:
when a Patch Data Unit (PDU) does not contain geometry information, encoding the PDU to generate a bitstream, and simultaneously determining a first indication parameter and a second indication parameter of the PDU, wherein the first indication parameter is used for determining whether there is a PDU that does not contain geometry information, and the second indication parameter is used for determining whether the PDU contains geometry information; and
signalling the first indication parameter and the second indication parameter into the bitstream.

15. The method of claim 14, further comprising:
when the PDU does not contain geometry information, determining texture information corresponding to the PDU; and
encoding the PDU based on the texture information to generate the bitstream.

16. The method of claim 14, further comprising:
when the PDU does not contain geometry information, determining texture information corresponding to the PDU and a reference PDU;
determining first geometry information corresponding to the PDU based on the reference PDU;
encoding the PDU based on the texture information and the first geometry information to generate the bitstream; and
signalling identification information of the reference PDU into the bitstream.

17. The method of claim 16, wherein determining the first geometry information corresponding to the PDU based on the reference PDU comprises:
determining second geometry information of the reference PDU; and
determining the first geometry information by using the second geometry information.

18. The method of any one of claims 14 to 17, further comprising:
when all PDUs contain geometry information, determining texture information and first geometry information corresponding to the PDUs; and
encoding the PDUs based on the texture information and the first geometry information to generate the bitstream.

19. The method of any one of claims 14 to 17, further comprises:
when the PDU contains geometry information, determining texture information and first geometry information corresponding to the PDU; and
encoding the PDU based on the texture information and the first geometry information to generate the bitstream.

20. The method of claim 15, further comprising:
constructing a target window based on the PDU that contains geometry information; and
performing colouring process on the target window based on the texture information of the PDU to obtain a rendered picture.

21. The method of claim 16, further comprising:
performing PDU-geometry-absent reconstruction process on the PDU that does not contain geometry information based on the reference PDU;
constructing a target window based on geometry information of the PDU; and
performing colouring process on the target window based on the texture information of the PDU to obtain a rendered picture.

22. The method of claim 14, wherein,
when there is a PDU that does not contain geometry information in a current atlas sequence, a value of the first indication parameter is determined to be a first value; and
when all PDUs in the current atlas sequence contain geometry information, the value of the first indication parameter is determined to be a second value.

23. The method of claim 14, wherein,
when there is a PDU that does not contain geometry information in a current atlas, a value of the first indication parameter is determined to be a first value; and
when all PDUs in the current atlas contain geometry information, the value of the first indication parameter is determined to be a second value.

24. The method of claim 14, wherein,
when the PDU does not contain geometry information, a value of the second indicating parameter is determined to be a first value; and
when the PDU contains geometry information, the value of the second indication parameter is determined to be a second value.

25. The method of any one of claims 22 to 24, wherein,
the first value is 1 and the second value is 0; or
the first value is set to true and the second value is set to false.

26. The method of claim 16, further comprising:
signalling the first indication parameter into the bitstream;
when there is a PDU that does not contain geometry information, signalling the second indication parameter into the bitstream; and
when the PDU does not contain geometry information, signalling the identification information into the bitstream.

27. A decoder comprising a decoding part, a first determination part, and a reconstruction part, wherein,
the decoding part is configured to decode a bitstream;
the first determination part is configured to determine a first indication parameter, and when the first indication parameter indicates that there is a Patch Data Unit (PDU) that does not contain geometry information, determine a second indication parameter corresponding to the PDU; and
the reconstruction part is configured to when the second indication parameter indicates that the PDU does not contain geometry information, perform reconstruction process based on texture information corresponding to the PDU.

28. A decoder, wherein the encoder comprises a first processor and a first memory storing instructions executable by the first processor, and the method of any one of claims 1 to 13 is implemented by the first processor when the instructions are executed.

29. An encoder comprising an encoding part, wherein,
the encoding part is configured to when a Patch Data Unit (PDU) does not contain geometry information, encode the PDU to generate a bitstream, and simultaneously determine a first indication parameter and a second indication parameter of the PDU, wherein the first indication parameter is used for determining whether there is a PDU that does not contain geometry information, and the second indication parameter is used for determining whether the PDU contains geometry information; and signal the first indication parameter and the second indication parameter into the bitstream.

30. An encoder, wherein the decoder comprises a second processor and a second memory storing instructions executable by the second processor, and the method of any one of claims 14 to 26 is implemented by the second processor when the instructions are executed.

31. A computer storage medium, wherein the computer storage medium stores a computer program that implements the method of any one of claims 1 to 13 when executed by a first processor or the method of any one of claims 14 to 26 when executed by a second processor.
